# EUROPÄISCHE PATENTSCHRIFT

(11) **EP 1 021 791 B1**
(45) Veröffentlichungstag und Bekanntmachung des Hinweises auf die Patenterteilung: **22.05.2002**
(21) Anmeldenummer: 98952519.1
(22) Anmeldetag: 27.08.1998
(51) Int. Cl.: G06K 19/00

(54) **CHIPKARTE MIT SPEICHER FÜR ANWENDUNGSABHÄNGIG NACHLADBARE PROGRAMME**
CHIP CARD WITH MEMORY FOR APPLICATION DEPENDENT RELOADABLE PROGRAMS
CARTE A PUCE DOTEE D'UNE MEMOIRE DESTINEE A UN PROGRAMME CHARGEABLE ULTERIEUREMENT EN FONCTION DE L'APPLICATION

(30) Priorität: 09.09.1997 DE 19739545
(43) Veröffentlichungstag der Anmeldung: 26.07.2000
(73) Patentinhaber: SIEMENS AKTIENGESELLSCHAFT, 80333 München (DE)
(72) Erfinder: WEINLÄNDER, Markus, D-91230 Happurg (DE)
(86) Internationale Anmeldenummer: DE9802530
(87) Internationale Veröffentlichungsnummer: WO9913430

(56) Entgegenhaltungen:
- EP-A- 0 383 518
- EP-A- 0 563 997

## Beschreibung

Chipkarten weisen häufig einen Datenspeicher auf, welcher beispielsweise in Form eines hierarchischen Dateisystems organisiert ist und welcher insbesondere in Form eines EEPROM-Speicherbausteins vorliegt. Zusätzlich dient der Datenspeicher von Chipkarten insbesondere auch als Speicher für anwendungsabhängig nachladbare Programme. Das Nachladen von Programmen nach der Herstellung der Chipkarte und insbesondere nach deren Personalisierung bzw. Initialisierung ermöglicht es, nachträglich insbesondere Programmroutinen oder Dateien nachzuladen, wie beispielsweise Verschlüsselungsalgorithmen, welche nur der Chipkartenanwendungsanbieter und nicht der Chipkartenhersteller kennt. Auch Programme zur Fehlerbeseitigung oder Erweiterungsroutinen insbesondere für das Betriebssystem der Chipkarte sind nachträglich nachladbar. Beispielsweise kann somit ein aufwendiges Reengineering eines ROM-Speicherbausteins mit einem fehlerhaften Chipkartenbetriebssystem entfallen, da Programmroutinen zur Fehlerkorrektur nachladbar sind. Beispielsweise können anwendungsabhängig auch Anwendungs- und Benutzerprogramme nachgeladen werden.

Bei Chipkarten besteht dabei das Problem, daß für die in der Regel auf Chipkarten-Programmcode-Ebene, insbesondere auf der Maschinenenbefehlsebene erstellten Programme nur Befehlsanweisungen mit absoluten Adreßparametern zur Verfügung stehen. Dies sind Befehlsanweisungen mit einer absoluten Speicheradressierung, bei denen die Zugriffsadresse im Speicher der Chipkarte direkt angegeben wird und welche unabhängig von der Speicheradresse der entsprechenden Befehlsanweisung selbst ist. In der Chipkarte stehen dabei die bei PC-Systemen in der Regel verwendeten Befehlsanweisungen mit einer relativen Speicheradressierung gar nicht oder nur in einem sehr eingeschränkten Maße zur Verfügung, so daß bei Programmen für Chipkarten auf Befehlsanweisungen mit einer absoluten Speicheradressierung zurückgegriffen werden muß. Derartige Befehlsanweisungen bei Chipkarten mit absoluten Adreßparametern sind insbesondere Sprungbefehle, Verschiebe- oder Adressierungsbefehle, wie beispielsweise die sogenannten 'MOV_DPTR', '#adrs', 'LCALL_adrs' oder 'LJMP_adrs' Befehlsanweisungen.

Bei der Erstellung eines nachladbaren Programms mit Befehlsanweisungen mit absoluten Adreßparametern für eine Chipkarte, ist es somit erforderlich, daß der vorgesehene Speicherbereich bekannt ist, insbesondere die Startadresse bekannt ist, an den bzw. an die das Programm nachgeladen werden soll.

Soll das Programm an einer anderen Stelle im Speicher abgespeichert werden, so ist eine Anpassung bestimmter Befehlsanweisungen mit absoluten Adreßparametern erforderlich. Dabei liegen insbesondere zwei Gruppen von Befehlsanweisungen mit absoluten Adreßparametern vor. Eine erste Gruppe dieser Befehlsanweisungen ist von dem Speicherbereich, den das Programm im Speicher belegt unabhängig, insbesondere weil die Adreßparameter auf Speicherbereiche verweisen, welche vom nachladbaren Programm nicht belegt sind, beispielsweise auf das Betriebssystem der Chipkarte. Eine zweite Gruppe dieser Befehlsanweisungen hingegen ist von dem Speicherbereich, den das Programm im Speicher belegt abhängig, insbesondere weil die Adreßparameter auf den Speicherbereich verweisen, der vom nachladbaren Programm belegt ist. Wird das Programm verschoben, so müssen die Adreßparameter der zweiten Gruppe von Befehlsanweisungen angepaßt werden, während die Adreßparameter der ersten Gruppe von Befehlsanweisungen unverändert bleiben müssen.

Ein Problem ist dabei, daß Befehlsanweisungen mit absoluten Adreßparametern vom Speicherbereich des nachladbaren Programms im Speicher sowohl unabhängig als auch abhängig sein können. Die Unterscheidung für Befehlsanweisungen mit absoluten Adreßparametern zwischen erster und zweiter Gruppe ist dabei nicht vom Typus der jeweiligen Befehlsanweisung abhängig. Bekannt ist die nachteilhafte Möglichkeit, daß bereits bei der Erstellung eines nachladbaren Programms für Chipkarten für jeden vorsehbaren Anwendungsfall eine spezielle Version des entsprechenden nachladbaren Programms erstellt wird, welche dessen jeweilige anwendungsabhängige Anordnung im Speicher der Chipkarte berücksichtigt.

Besonders nachteilig ist es, daß.eine derartige Anpassung des Programms an dessen anwendungsabhängige Speicherbereichsbelegung im Speicher der Chipkarte insbesondere vom Anwender selbst in der Regel nicht vorgenommen werden kann, da dieser den Aufbau des nachladbären Programms häufig nicht kennt oder auch gar nicht kennen soll. Insbesondere ist ein aufwendiges Überarbeiten des Programms "von Hand" oder mit speziellen Compilern oder Interpretern durch den Hersteller des nachladbaren Programms erforderlich.

Aus der EP 0383518 ist eine Chipkarte bekannt, bei der die absoluten Adressen eines nachgeladenen anwendungsabhängigen Programms durch eine auf der Chipkarte angeordnete Datenverarbeitungseinheit an den zur Abspeicherung vorgesehenen Speicherbereich angepaßt werden. Anspruch 1 ist gegen diese Schrift abgegrenzt.

Aufgabe der Erfindung ist es, eine Chipkarte mit anwendungsabhängig nachladbaren Programmen anzugeben, welche eine vorteilhaftere Anpassung des jeweiligen Programms an dessen anwendungsabhängige Speicherbereichsbelegung im Speicher der Chipkarte ermöglicht.

Die Aufgabe wird gelöst mit der im Anspruch 1 angegebenen Chipkarte.

Vorteil der erfindungsgemäßen Chipkarte ist es, daß bei der Erstellung eines nachladbaren Programms, welches Befehlsanweisungen mit absoluten Adreßparametern aufweist, lediglich die Erstellung einer einzigen Programm-Version erforderlich ist. Diese Grundversion des Programms ist dann in den Speicher der Chipkarte anwendungsabhängig nachladbar und insbesondere durch die Chipkarte selbst installierbar bzw. konfigurierbar, d.h. an den anwendungsabhängig belegten Speicherbereich anpaßbar.

Besonders vorteilhaft ist es, daß der vom nachladbaren Programm belegte Speicherbereich erfindungsgemäß einen ersten und zweiten Teilbereich zur Separierung zumindest der Befehlsanweisungen mit absoluten Adreßparametern aufweist, welche auf den vom Programm belegten Speicherbereich und die vom Programm nicht belegten Speicherbereiche verweisen. Somit ist vorteilhaft die erforderliche Anpassung des nachladbaren Programms an den von diesem belegten Speicherbereich, d.h. die erforderliche Anpassung des Programms insbesondere an dessen anwendungsabhängige Startadresse, vollständig von der Programmausführungseinheit der Chipkarte ausführbar. Ein Anwender der Chipkarte benötigt zum Nachladen eines Programms somit vorteilhaft keine Detailkenntnisse von der Programmstruktur, so daß insbesondere auch Programme nachladbar sind, welche die Chipkartensicherheit betreffen und deren innere Strukturen dem Anwender nicht bekannt werden sollen.

Weitere vorteilhafte Ausführungsformen der Erfindung sind in den entsprechenden Unteransprüchen angegeben.

Die Erfindung wird desweiteren anhand der in den nachfolgend kurz angeführten Figuren dargestellten Ausführungsbeispiele weiter erläutert. Dabei zeigt beispielhaft:
- FIG 1: einen schematischen Aufbau der Chipkarte gemäß der Erfindung mit Programmausführungseinheit und Speicher, in welchem anwendungsabhängig nachgeladene Programme gespeichert sind, welche erste und zweite Befehlsanweisungen mit absoluten Adreßparametern aufweisen, und
- FIG 2: einen schematischen Aufbau eines nachladbaren Programms, dessen erste und zweite Befehlsanweisungen im ersten bzw. zweiten Teilbereich des vom nachladbaren Programm belegten Speicherbereichs separiert sind.

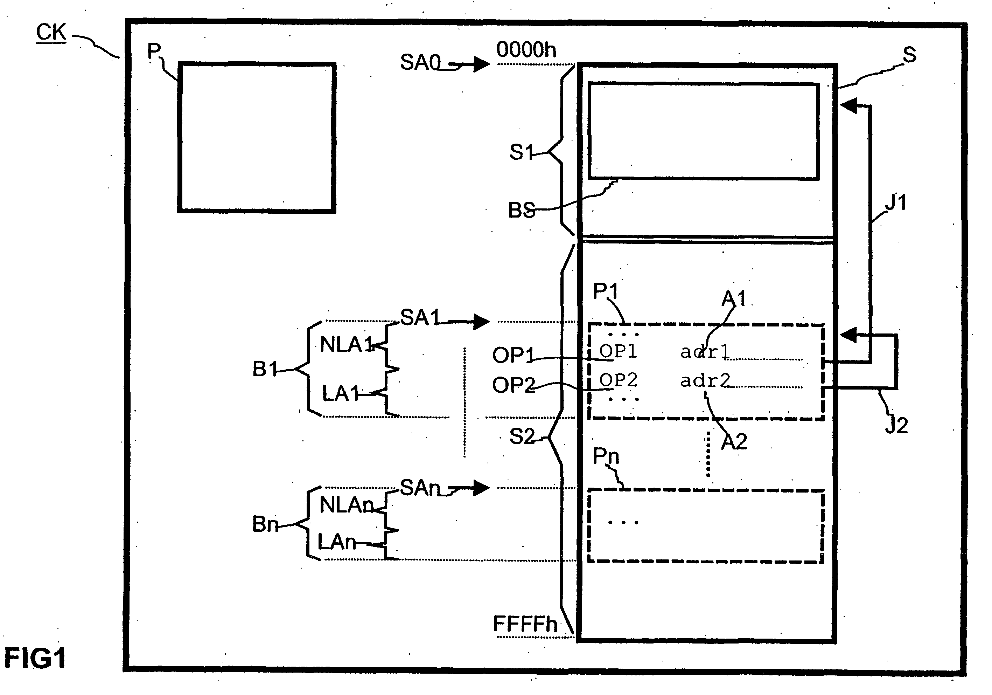

In der Figur 1 ist beispielhaft ein schematischer Aufbau der Chipkarte CK gemäß der Erfindung mit einer Programmausführungseinheit P und einem Speicher S dargestellt. Der Speicher S weist wenigstens ein anwendungsabhängig nachladbares Programm auf, wobei in der Figur 1 beispielhaft die mit den Bezugszeichen P1 bis Pn bezeichneten, anwendungsabhängig in den Speicher S nachgeladenen Programme dargestellt sind. Jedes der nachladbaren Programme P1 bis Pn belegt im nachgeladenen Zustand im Speicher S einen bestimmten Speicherbereich B1 bis Bn, von denen jeder insbesondere eine Startadresse SA1 bis SAn aufweist. Die Erfindung wird im folgenden insbesondere am Beispiel des nachladbaren Programms P1 beschrieben.

Das nachladbare Programm P1 weist mit OP1 bezeichnete erste Befehlsanweisungen mit absoluten Adreßparametern A1 auf, welche auf Speicherbereiche verweisen, die vom nachladbaren Programm P1 bis Pn nicht belegt sind. Beispielsweise sind dies für das in Figur 1 dargestellte, nachladbare Programm P1 diejenigen Speicherbereiche des Speichers S, welche außerhalb des Speicherbereichs B1 liegen. Der über die Adreßparameter A1 angeforderte, absolute Adressierungsbezug der ersten Befehlsanweisungen OP1 ist in der Figur 1 beispielhaft mit dem Pfeil J1 dargestellt.

Des weiteren weist das nachladbare Programm P1 mit OP2 bezeichnete zweite Befehlsanweisungen mit absoluten Adreßparametern A2 auf, welche auf den vom nachladbaren Programm P1 belegten Speicherbereich B1 verweisen. Der über die Adreßparameter A2 angeforderte, absolute Adressierungsbezug der zweiten Befehlsanweisungen OP2 ist in der Figur 1 beispielhaft mit dem Pfeil J2 dargestellt.

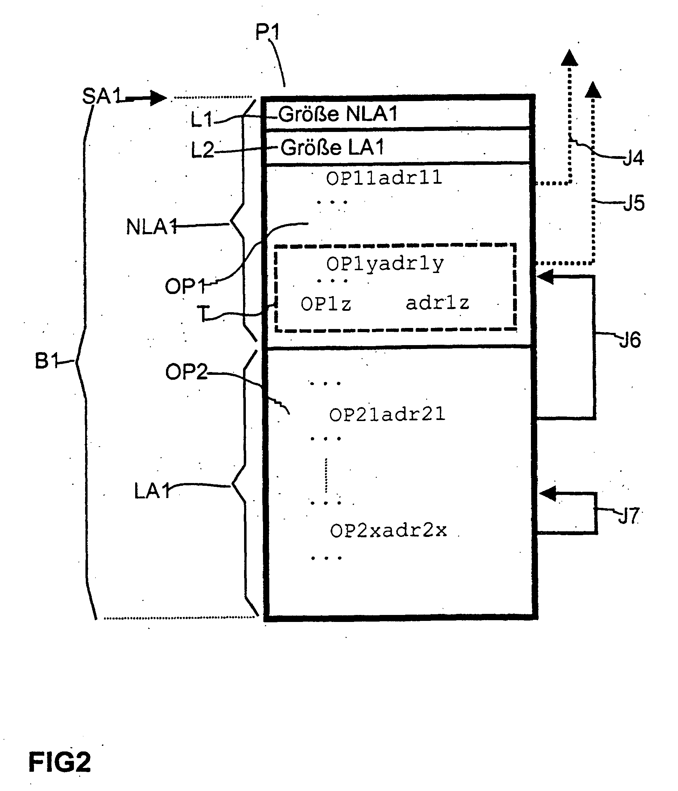

In der Figur 2 ist beispielhaft ein nachladbares Programm P1 der erfindungsgemäßen Chipkarte CK dargestellt, welches den Speicherbereich B1 im Speicher S der erfindungsgemäßen Chipkarte CK belegt. Die in der Figur 1 das Bezugszeichen OP1 bzw. OP2 aufweisenden ersten bzw. zweiten Befehlsanweisungen weisen in der Figur 2 beispielhaft die Bezugszeichen OP11 bis OP1z bzw. OP21 bis OP2x mit den absoluten Adreßparametern adr11 bis adr1z bzw. adr21 bis adr2x auf. Der vom nachladbaren Programm P1 im Speicher S belegte Speicherbereich B1 weist gemäß der Erfindung einen ersten Teilbereich NLA1 und wenigstens einen zweiten Teilbereich LA1 auf. Dabei sind erfindungsgemäß die ersten Befehlsanweisungen OP11 bis OP1z, deren absolute Adreßparameter adr11 bis adr1z auf Speicherbereiche verweisen, die vom nachladbaren .Programm P1 nicht belegt sind, im ersten Teilbereich NLA1 angeordnet. Adressierungsbezüge der ersten Befehlsanweisungen OP11 und OP1y auf vom nachladbaren Programin P1 nicht belegte Speicherbereiche sind in der Figur 2 beispielhaft mit den Pfeilen J4 bzw. J5 dargestellt. Die zweiten Befehlsanweisungen OP21 bis OP2x, deren absolute Adreßparameter adr21 bis adr2x auf den vom nachladbaren Programm P1 belegten Speicherbereich B1 verweisen, sind erfindungsgemäß im zweiten Teilbereich LA1 angeordnet. Adressierungsbezüge der zweiten Befehlsanweisungen OP21 und OP2x auf den vom nachladbaren Programm P1 belegten Speicherbereich B1 sind in der Figur 2 beispielhaft mit den Pfeilen J6 bzw. J7 dargestellt.

Der schematisch dargestellte Aufbau des in der Figur 2 dargestellten, nachladbaren Programms P1 ist selbstverständlich auf die in der Figur 1 dargestellten, gemäß der Erfindung nachladbaren Programme P1 bis Pn übertragbar, welche im Speicher S die Speicherbereiche B1 bis Bn belegen. Diese weisen die in der Figur 1 dargestellten ersten und zweiten Teilbereiche NLA1 bis NLAn bzw. LA1 bis LAn auf.

Die Erfindung soll am Beispiel einer in der Figur 2 dargestellten Ausführungsform näher erläutert werden. Dabei paßt die Programmausführungseinheit P erfindungsgemäß z.B. die im zweiten Teilbereich LA1 angeordneten Adreßparameter adr21 bis adr2x der zweiten Befehlsanweisungen OP21 bis OP2x beim Nachladen des Programms P1 auf den anwendungsabhängig belegten Speicherbereich B1 an. Durch die gemäß der Erfindung vorliegende, vorteilhafte Sortierung zwischen ersten und zweiten Befehlsanweisungen OP11 bis OPlz bzw. OP21 bis OP2x sind nur die im zweiten Teilbereich LA1 angeordneten Adreßparameter adr21 bis adr2x der zweiten Befehlsanweisungen OP21 bis OP2x anzupassen. Die Anpassung der zweiten Befehlsanweisungen OP21 bis OP2x erfolgt insbesondere in Abhängigkeit der Startadresse SA1 des vom nachgeladenen Programm P1 belegten Speicherbereichs B1. Für die im ersten Teilbereich NLA1 angeordneten Adreßparameter adr11 bis adr1z der ersten Befehlsanweisungen OP11 bis OP1z erfolgt hingegen von der Programmausführungseinheit P keine Anpassung, da diese auf Speicherbereiche außerhalb des Speicherbereichs B1 verweisen.

Beispielsweise ist das Programm P1 vor dem Nachladen zunächst für die Startadresse hexadezimal 0000h erstellt. Nach dem Nachladen des Programms P1 an die anwendungsabhängige Startadresse SA1, wird durch die Programmausführungseinheit P der Wert der Startadresse SA1 pauschal auf alle der im zweiten Teilbereich LA1 angeordneten Adreßparameter adr21 bis adr2x der zweiten Befehlsanweisungen OP21 bis OP2x aufaddiert. Dadurch bleiben die absoluten Adressierungsbezüge der Adreßparameter adr21 bis adr2x und damit die Funktionstüchtigkeit des Programms P1 erhalten.

Aufgrund des programmtechnischen, insbesondere semantischen Zusammenhangs von Befehlsanweisungen in einem Programm, kann es insbesondere erforderlich sein, auch aus dem im zweiten Teilbereich LA1 abgespeicherten Teil des nachladbaren Programms P1 auf Speicherbereiche zugreifen zu können, welche außerhalb des belegten Speicherbereichs B1 liegen. Bei einer vorteilhaften Ausführungsform der Erfindung erfolgt ein programmtechnischer Zugriff von zweiten Befehlsanweisungen OP21 bis OP2x im zweiten Teilbereich LA1 auf vom nachladbaren Programm P1 nicht belegte Speicherbereiche über die im ersten Teilbereich NLA1 angeordneten ersten Befehlsanweisungen OP11 bis OP1z. Dies wird im folgenden am Beispiel eines das Bezugszeichen OP21 aufweisenden zweiten Befehlsanweisung OP21 erläutert. Die absoluten Adreßparameter adr21 der im zweiten Teilbereich LA1 angeordneten zweiten Befehlsanweisung OP21 verweisen dabei auf eine im ersten Teilbereich NLA1 angeordnete erste Befehlsanweisung OPly, wie in Figur 2 beispielhaft durch den Pfeil J6 dargestellt ist. Die absoluten Adreßparameter adrly der entsprechenden ersten Befehlsanweisung OP1y verweisen auf die Speicherbereiche, d.h. insbesondere auf diejenige Speicheradresse des Speichers S, auf welche der programmtechnische Zugriff erfolgen soll, wie in Figur 2 beispielhaft durch den Pfeil J5 dargestellt ist. Vorteilhaft ist im ersten Teilbereich NLA1 insbesondere eine Sprungtabelle T mit ersten Befehlsanweisung OP1y bis OP1z angeordnet, über welche ein programmtechnischer Zugriff von im zweiten Teilbereich LA1 angeordneten zweiten Befehlsanweisungen OP21 bis OP2x auf vom nachladbaren Programm P1 nicht belegte Speicherbereiche erfolgen kann, beispielsweise auf Speicherbereiche der Chipkarte, an denen Betriebssystemroutinen abgespeichert sind.

Weitere vorteilhafte Ausführungsformen der Erfindung werden im folgenden anhand der Figuren 1 und 2 näher beschrieben.

In einer weiteren vorteilhaften Ausführungsform der Erfindung weist der Speicher S der Chipkarte CK einen ersten Teilspeicher S1 auf, auf den die Adreßparameter A1 der ersten Befehlsanweisungen OP1 der nachladbaren Programme P1 bis Pn verweisen. Des weiteren weist der Speicher S vorteilhaft wenigstens einen zweiten Teilspeicher S2 auf, in welchem der von den nachladbaren Programmen P1 bis Pn belegte Speicherbereich B1 bis Bn liegt. Bevorzugt ist im ersten Teilspeicher S1 des Speichers S insbesondere ein Betriebssystemprogramm BS der Chipkarte CK abgespeichert. Der erste Teilspeicher S1 und der zweite Teilspeicher S2 sind insbesondere physikalisch unterschiedliche Speicher der Chipkarte CK, wie beispielsweise ein in Form eines ROM-Bausteins vorliegender Nur-Lese-Speicher bzw. ein in Form eines EEPROM-Bausteins vorliegender Schreib-Lese-Speicher. Während beispielsweise das Betriebssystemprogramm BS bereits bei der Herstellung der Chipkarte CK im ersten Teilspeicher S1 des Speichers S abspeicherbar ist, sind die Programme P1 bis Pn nachträglich anwendungsabhängig in den zweiten Teilspeicher S2 nachladbar. Unabhängig vom ersten und zweiten Teilspeicher S1 bzw. S2 kann der Speicher S der Chipkarte CK vorteilhaft eine durchgehende Speicheradressierung aufweisen, beispielsweise von Hexadezimal 0000h bis Hexadezimal FFFFh.

In einer vorteilhaften Ausführungsform der Erfindung ist im Speicher S der Chipkarte zumindest die Größe der ersten Teilbereiche NLA1 bis NLAn der von den nachladbaren Programmen P1 bis Pn belegten Speicherbereiche B1 bis Bn abgespeichert. Vorteilhaft ist die Größe des ersten Teilbereichs NLA1 bis NLAn dabei im entsprechenden, belegten Speicherbereich B1 bis Bn abgespeichert, wie in der Figur 2 beispielhaft für das Programm P1 mit dem Bezugszeichen L1 dargestellt ist. Des weiteren kann insbesondere zusätzlich auch die Größe des zweiten Teilbereichs LA1 bis LAn abgespeichert sein, wie in der Figur 2 beispielhaft für das Programm P1 mit dem Bezugszeichen L2 dargestellt ist.

## Patentansprüche

1. Chipkarte (CK) mit einer Programmausführungseinheit (P) und einem Speicher (S) für wenigstens ein anwendungsabhängig nachladbares Programm (P1..Pn), wobei
- das nachladbare Programm (P1..Pn) im nachgeladenen Zustand im Speicher (S) einen bestimmten Speicherbereich (B1..Bn) belegt und Befehlsanweisungen mit absoluten Adreßparametern aufweist,
- die Programmausführungseinheit (P) die Adreßparameter der Befehlsanweisungen (OP2, OP21..OP2x) beim Nachladen des Programms (P1.. Pn) auf den anwendungsabhängig belegten Speicherbereich (B1.. Bn) anpaßt
**dadurch gekennzeichnet, daß**
- der vom nachladbaren Programm (P1..Pn) im Speicher (S) belegte Speicherbereich (B1..Bn) einen ersten Teilbereich (NLA) und wenigstens einen zweiten Teilbereich (LA), der vom ersten Teilbereich separiert ist, aufweist,
- erste Befehlsanweisungen (OP1, OP11..OP1z) mit absoluten Adreßparametern (A1, adr11..adr1z) gegeben sind, welche auf Speicherbereiche (S1) verweisen, die vom nachladbaren Programm (P1..Pn) nicht belegt sind,
- zweite Befehlsanweisungen (OP2, OP21..OP2x) mit absoluten Adreßparametern (A2, adr21..adr2x) gegeben sind, welche auf den Speicherbereich (B1..Bn) verweisen, der vom nachladbaren Programm (P1..Pn) belegt ist,
- die ersten Befehlsanweisungen (OP1, OP11..OP1z) nur im ersten Teilbereich (NLA1..NLAn) angeordnet sind, und
- die zweiten Befehlsanweisungen (OP2, OP21..OP2x) nur im zweiten Teilbereich (LA1..LAn) angeordnet sind, und
- die Programmausführungseinheit (P) die im zweiten Teilbereich (LA1..LAn) angeordneten Adreßparameter (A2, adr21.. adr2x) der zweiten Befehlsanweisungen (OP2, OP21..OP2x) beim Nachladen des Programms (P1.. Pn) auf den anwendungsabhängig belegten Speicherbereich (B1.. Bn) anpaßt.

2. Chipkarte (CK) nach Anspruch 1, wobei die Anpassung der Adreßparameter (A2, adr21.. adr2x) der zweiten Befehlsanweisungen (OP2, OP21..OP2x) in Abhängigkeit einer Startadresse (SA1..SAn) des vom nachgeladenen Programm (P1.. Pn) belegten Speicherbereichs (B1.. Bn) erfolgt.

3. Chipkarte (CK) nach Anspruch 1 oder 2, wobei ein programmtechnischer Zugriff (J5, J6) von zweiten Befehlsanweisungen (OP21) auf vom nachladbaren Programm (P1) nicht belegte Speicherbereiche (S1) dadurch erfolgt, daß
a) die absoluten Adreßparameter (adr21) der im zweiten Teilbereich (LA) angeordneten zweiten Befehlsanweisungen (OP21) auf im ersten Teilbereich (NLA1) angeordnete erste Befehlsanweisungen (OP1y, T) verweisen (J6), und
b) die absoluten Adreßparameter (adrly) der entsprechenden, im ersten Teilbereich (NLA1) angeordneten ersten Befehlsanweisungen (OP1y, T) auf die Speicherbereiche (S1) verweisen, auf welche der programmtechnische Zugriff(J5, J6) erfolgen soll.

4. Chipkarte (CK) nach einem der vorangegangenen Ansprüche, wobei der Speicher (S) aufweist
a) einen ersten Teilspeicher (S1), auf den die Adreßparameter (A1, adr11..adr1z) der ersten Befehlsanweisungen (OP1, OP11..OP1z) des nachladbaren Programms (P1..Pn) verweisen, und
b) wenigstens einen zweiten Teilspeicher (S2), in welchem der vom nachladbaren Programm (P1..Pn) belegte Speicherbereich (B1..Bn) liegt.

5. Chipkarte (CK) nach Anspruch 4, wobei im ersten Teilspeicher (S1) ein Betriebssystemprogramm (BS) der Chipkarte (CK) abgespeichert ist.

6. Chipkarte (CK) nach einem der Ansprüche 4 oder 5, wobei der erste Teilspeicher (S1) und der zweite Teilspeicher (S2) physikalisch unterschiedliche Speicher der Chipkarte (CK) sind.

7. Chipkarte (CK) nach einem der vorangegangenen Ansprüche, wobei im Speicher (S) zumindest die Größe des ersten Teilbereichs (NLA1..NLAn) des vom nachladbaren Programm (P1..Pn) belegten Speicherbereichs (B1..Bn) abgespeichert (L1).

## Claims

1. Chip card (CK) having a program execution unit (P) and a memory (S) for at least one program (P1..Pn) which can be reloaded as a function of the application,
- in the reloaded state in the memory (S), the reloadable program (P1..Pn) occupying a specific memory area (B1..Bn) and having command instructions with absolute address parameters,
- the program execution (P) adapting the address parameters of the command instructions (OP2, OP21..OP2x) when the program (P1..Pn) is reloaded to the memory area (B1..Bn) which is occupied as a function of the application, **characterized in that**
- the memory area (B1..Bn) which is occupied by the reloadable program (P1..Pn) in the memory (S) has a first memory element (NLA) and at least one second memory element (LA), which is separated from the first memory element,
- first command instructions (OP1, OP11..OP1z) with absolute address parameters (A1, adr11..adr1z) are given which refer to memory areas (S1) which are not occupied by the reloadable program (P1..Pn),
- second command instructions (OP2, OP21..OP2x) with absolute address parameters (A2, adr21..adr2x) which refer to the memory area (B1..Bn) which is occupied by the reloadable program (P1..Pn),
- the first command instructions (OP1, OP11..OP1z) are only arranged in the first memory element (NLA1..NLAn), and
- the second command instructions (OP2, OP21..OP2x) are only arranged in the second memory element (LA1..LAn) and
- the program execution unit (P) adapts those address parameters (A2, adr21..adr2x) of the second command instructions (OP2, OP21..OP2x) which are arranged in the second memory element (LA1..LAn) when the program (P1..Pn) is reloaded to the memory area (B1..Bn) which is occupied as a function of the application.

2. Chip card (CK) according to Claim 1, the address parameters (A2, adr21..adr2x) of the second command instructions (OP2, OP21..OP2x) being adapted as a function) of a start address (SA1..SAn) of the memory, area (B1..Bn) which is occupied by the reloaded program (P1..Pn).

3. Chip card (CK) according to Claim 1 or 2, a programming access (J5, J6) by second command instructions (OP21) to memory areas (S1) which are not occupied by the reloadable program (P1) being effected by virtue of the fact that
a) the absolute address parameters (adr21) of the second command instructions (OP21) arranged in the second memory element (LA) refer (J6) to first command instructions (OP1y, T) which are arranged in the first memory element (NLA1), and
b) the absolute address parameters (adrly) of the corresponding first command instructions (OP1y, T) which are arranged in the first memory element (NLA1) refer to the memory areas (S1) at which the programming access (J5, J6) is to be effected.

4. Chip card (CK) according to one of the preceding claims, the memory (S) having
a) a first memory subdivision (S1) to which the address parameters (A1, adr11..adr1z) of the first command instructions (OP1, OP11..OP1z) of the reloadable program (P1..Pn) refer, and
b) at least one second memory subdivision (S2) in which the memory area (B1..Bn) which is occupied by the reloadable program (P1..Pn) is located.

5. Chip card (CK) according to Claim 4, an operating system program (BS) of the chip card (CK) being stored in the first memory subdivision (S1).

6. Chip card (CK) according to one of Claims 4 or 5, the first memory subdivision (S1) and the second memory subdivision (S2) being physically different memories of the chip card (CK) .

7. Chip card (CK) according to one of the preceding claims, at least the magnitude of the first memory element (NLA1..NLAn) of the memory area (B1..Bn) which is occupied by the reloadable program (P1..Pn) being stored (L1) in the memory (S).

## Revendications

1. Carte à puce (CK) dotée d'une unité d'exécution de programme (P) et d'une mémoire (S) pour au moins un programme (P1...Pn) rechargeable en fonction de l'application,
- le programme (P1....Pn) rechargeable occupant dans la mémoire, une fois rechargé, une zone mémoire (B1...Bn) définie, et présentant des déclarations d'instruction avec des paramètres d'adresse absolus,
- l'unité d'exécution du programme (P) adaptant les paramètres d'adresse des déclarations d'instruction (OP2, OP21, ...OP2X) lors du rechargement du programme (P1...Pn) à la zone mémoire (B1...Bn) occupée en fonction de l'application,
**caractérisée en ce que**
- la zone mémoire (B1...Bn) occupée dans la mémoire (S) par le programme rechargeable (P1...Pn) présente une première zone partielle (NLA) et au moins une deuxième zone partielle (LA) séparée de la première zone partielle,
- les premières déclarations d'instruction (OP1, OP11..OP1z) sont données avec des paramètres d'adresse absolus (A1, adr11,...adr1z) qui renvoient à des zones mémoire (S1) non occupées par le programme rechargeable (P1...Pn),
- les deuxièmes déclarations d'instruction (OP2, OP21..OP2x) sont données avec des paramètres d'adresse absolus (A2, adr21,...adr2x) qui renvoient à la zone mémoire (B1...Bn) occupée par le programme rechargeable (P1...Pn),
- les premières déclarations d'instruction (OP1, OP11..OP1z) ne sont placées que dans la première zone partielle (NLA1...NLAn), et
- les deuxièmes déclarations d'instruction (OP2, OP21..OP2x) ne sont placées que dans la deuxième zone partielle (LA1...LAn), et
- l'unité d'exécution de programme (P) adapte les paramètres d'adresse (A2, adr21...adr2x) des deuxièmes déclarations d'instruction (OP2, OP21,..OP2x), placés dans la deuxième zone partielle (LA1...LAn) à la zone mémoire (B1...Bn) occupée en fonction de l'application lors du rechargement du programme (P1..Pn).

2. Carte à puce (CK) selon la revendication 1, dans laquelle l'adaptation des paramètres d'adresse (A2, adr21,...adr2x) des deuxièmes déclarations d'instruction (OP2, OP21..OP2x) est réalisée en fonction d'une adresse de démarrage (SA1...SAn) de la zone mémoire (B1...Bn) occupée par le programme rechargé (P1...Pn).

3. Carte à puce (CK) selon la revendication 1 ou 2, dans laquelle un accès technique de programme (J5, J6) de deuxièmes déclarations d'instruction (OP21) aux zones mémoire (S1) non occupées par le programme rechargeable (P1) **est réalisé en ce que**
a) les paramètres d'adresse absolus (adr21) des deuxièmes déclarations d'instruction placées dans la deuxième zone partielle (LA) renvoient (J6) aux premières déclarations d'instruction (OPly, T) placées dans la première zone partielle (NLA1), et
b) les paramètres d'adresse absolus (adr1y) des premières déclarations d'instruction (OP1y, T) correspondantes placées dans la première zone partielle (NLA1) renvoient aux zones mémoire (S1) sur lesquelles l'accès technique de programme (J5, J6) doit être réalisé.

4. Carte à puce (CK) selon l'une des revendications précédentes, dans laquelle la mémoire (S) présente :
a) une première mémoire partielle (S1) à laquelle renvoient les paramètres d'adresse (A1, adr11...adr1z) des premières déclarations d'instruction (OP1, OP11...OP1z) du programme rechargeable (P1...Pn), et
b) au moins une deuxième mémoire partielle (S2) dans laquelle est située la zone mémoire (B1...Bn) occupée par le programme rechargeable (P1...Pn).

5. Carte à puce (CK) selon la revendication 4, dans laquelle un programme de système d'exploitation (BS) de la carte à puce (CK) est stocké dans la première mémoire partielle (S1).

6. Carte à puce (CK) selon l'une des revendications 4 ou 5, dans laquelle la première mémoire partielle (S1) et la deuxième mémoire partielle (S2) sont des mémoires différentes physiquement de la carte à puce (CK).

7. Carte à puce (CK) selon l'une des revendications précédentes, dans laquelle au moins la taille de la première zone partielle (NLA1...NLAn) de la zone mémoire (B1...Bn) occupée par le programme rechargeable (P1..Pn) est stockée (L1) dans la mémoire (S).
